# EUROPEAN PATENT APPLICATION

(11) **EP 2 810 731 A2**
(43) Date of publication of application: **10.12.2014**
(21) Application number: 14169603.9
(22) Date of filing: 23.05.2014
(51) Int. Cl.: B23K 9/095

(54) **ARC welding apparatus, ARC welding system, and ARC welding method**

(30) Priority: 07.06.2013 JP 2013120736
(71) Applicant: Kabushiki Kaisha Yaskawa Denki, Kitakyushu-shi, Fukuoka 806-0004 (JP)
(72) Inventor: Murakami, Masafumi, Kitakyushu-shi, Fukuoka 806-0004 (JP); Terada, Atsushi, Kitakyushu-shi, Fukuoka 806-0004 (JP)
(74) Representative: Viering, Jentschura & Partner Patent- und Rechtsanwälte

(57) **Abstract**

An arc welding apparatus (A1, A2) includes a difference calculating unit (U2, U6) configured to calculate a difference voltage value by subtracting a welding voltage value from a target voltage value; a speed setting unit (U3, U7) configured to set an advancing speed and a retreating speed of a welding consumable (44) with respect to a workpiece (W) to increase a ratio of a magnitude of the retreating speed to a magnitude of the advancing speed corresponding to an increase in the difference voltage value; and a driving unit (41) configured to drive the welding consumable at the advancing speed and the retreating speed to generate a short circuit condition and an arc condition.

## Description

### BACKGROUND

### 1. Technical Field

This disclosure relates to an arc welding apparatus, an arc welding system, and an arc welding method.

### 2. Related Art

For example, an arc welding apparatus in practical use repeatedly advances and retreats a welding consumable with respect to a workpiece so as to perform welding while periodically generating a short circuit condition and an arc condition. In this arc welding apparatus, in order to acquire a desired arc length, it is required to match the welding voltage with the target voltage. If the difference between the welding voltage and the target voltage becomes large, the arc becomes unstable and thus the quality of welded portion might be reduced. Here, an arc welding apparatus disclosed in Japanese Patent No. 5170315 changes the waveform of the welding electric current to match the welding voltage with the target voltage.

However, if the electric current waveform is changed such that the welding electric current sharply rises or sharply drops, spatter might increase.

Therefore, an object of this disclosure is to provide an arc welding apparatus, an arc welding system, and an arc welding method that can control a welding voltage while suppressing increase of spatter.

### SUMMARY

An arc welding apparatus includes a difference calculating unit configured to calculate a difference voltage value by subtracting a welding voltage value from a target voltage value; a speed setting unit configured to set an advancing speed and a retreating speed of a welding consumable with respect to a workpiece to increase a ratio of a magnitude of the retreating speed to a magnitude of the advancing speed corresponding to an increase in the difference voltage value; and a driving uni configured to drive the welding consumable at the advancing speed and the retreating speed to generate a short circuit condition and an arc condition.

### BRIEF DESCRIPTION OF DRAWINGS

Fig. 1 is a schematic diagram of an arc welding system that includes an arc welding apparatus according to a first embodiment;
Fig. 2 is a pattern diagram illustrating the configuration of the arc welding apparatus;
Fig. 3 is a block diagram illustrating the functional configuration of the arc welding apparatus;
Figs. 4A to 4C are graphs illustrating waveforms of a welding electric current, a welding voltage, and a feed speed in the case where a difference voltage value is zero;
Figs. 5A to 5C are graphs illustrating waveforms of a welding electric current, a welding voltage, and a feed speed in the case where the difference voltage value is a positive value; and
Fig. 6 is a block diagram illustrating the functional configuration of an arc welding apparatus according to a second embodiment.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

An arc welding apparatus according to one embodiment of this disclosure includes a difference calculating unit configured to calculate a difference voltage value by subtracting a welding voltage value from a target voltage value; a speed setting unit configured to set an advancing speed and a retreating speed of a welding consumable with respect to a workpiece to increase a ratio of a magnitude of the retreating speed to a magnitude of the advancing speed corresponding to an increase in the difference voltage value; and a driving unit configured to drive the welding consumable at the advancing speed and the retreating speed to generate a short circuit condition and an arc condition.

The arc welding apparatus according to one embodiment of this disclosure may be, for example, an apparatus for performing welding while repeatedly generating a short circuit condition and an arc condition.

An arc welding system according to one embodiment of this disclosure includes the above-described arc welding apparatus and a welding robot configured to hold and move the driving unit.

An arc welding method performed by an arc welding apparatus according to one embodiment of this disclosure, the method includes: calculating a difference voltage value by subtracting a welding voltage value from a target voltage value; setting an advancing speed and a retreating speed of a welding consumable with respect to a workpiece to increase a ratio of a magnitude of the retreating speed to a magnitude of the advancing speed corresponding to an increase in the difference voltage value; and driving the welding consumable at the advancing speed and the retreating speed to generate a short circuit condition and an arc condition.

One embodiment of this disclosure allows controlling the welding voltage while suppressing increase of spatter.

The following describes preferred embodiments of this disclosure in detail with reference to the accompanying drawings. In the following description, like reference numerals designate corresponding or identical elements or elements with corresponding or identical functions, and therefore such elements will not be further elaborated here.

### [First Embodiment]

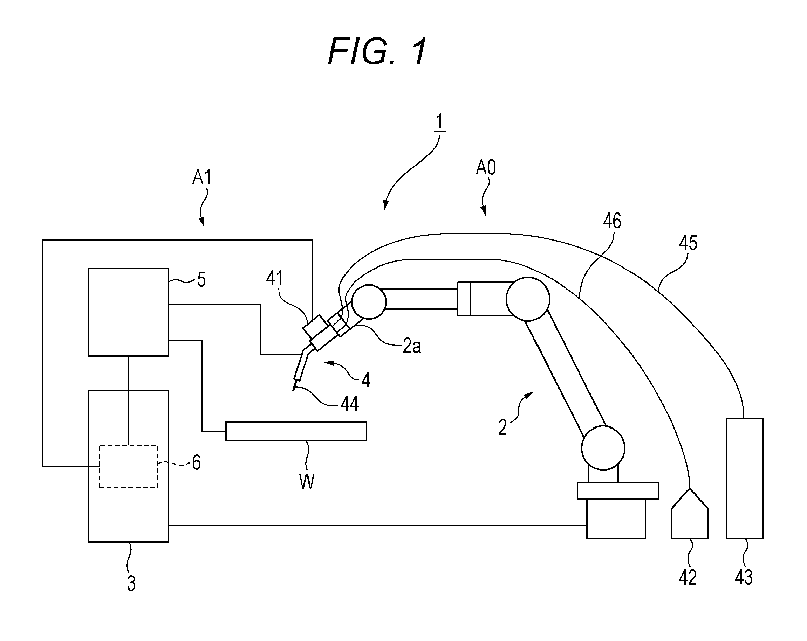

As illustrated in Fig. 1, an arc welding system 1 includes a robot apparatus A0 and an arc welding apparatus A1. The robot apparatus A0 includes a robot 2 and a robot controller 3. The robot 2 is, for example, a serial-link robot arm. The robot 2 includes a tip portion with a tool mounter 2a. On the tool mounter 2a of the robot 2, a welding torch 4 described later is mounted. The robot controller 3 controls actuators of the robot 2 such that the welding torch 4 moves along a welding target portion.

While repeatedly advancing and retreating a welding wire (welding consumable) 44 with respect to a workpiece W, the arc welding apparatus A1 supplies electric power between the welding wire 44 and the workpiece W so as to repeatedly generate a short circuit condition and an arc condition. The arc welding apparatus A1 includes the welding torch 4, an external controller 6, and a welding power supply 5.

The welding torch 4 is mounted on the tool mounter 2a of the robot 2 as described above. To the welding torch 4, a pail pack 42 is coupled via a conduit cable 46. Further, to the welding torch 4, a gas cylinder 43 is coupled via a gas hose 45. The pail pack 42 houses the welding wire 44 wound in a coil shape. The pail pack 42 supplies the welding wire 44 to the welding torch 4 through the conduit cable 46. The welding wire 44 is fed from the tip of the welding torch 4. The gas cylinder 43 contains shielding gas. The gas cylinder 43 supplies the shielding gas to the welding torch 4 through the gas hose 45. The shielding gas can employ, for example, carbon dioxide, argon, or the mixed gas of these.

The welding torch 4 includes a feeding mechanism 41. The feeding mechanism 41 performs, for example, forward feed and reverse feed of the welding wire 44 using an actuator such as a servo motor as a power source. The forward feed means that the welding wire 44 is advanced such that the tip of the welding wire 44 approaches the workpiece W. The reverse feed means that the welding wire 44 is retreated such that the tip of the welding wire 44 moves away from the workpiece W. That is, the feeding mechanism 41 corresponds to a driver that advances and retreats the welding wire 44 with respect to the workpiece W. The robot 2 on which the welding torch 4 is mounted corresponds to a welding robot that holds and moves the driver. Hereinafter, the feed speed during the forward feed of the welding wire 44 is referred to as "advancing speed." Additionally, the feed speed during the reverse feed of the welding wire 44 is referred to as "retreating speed."

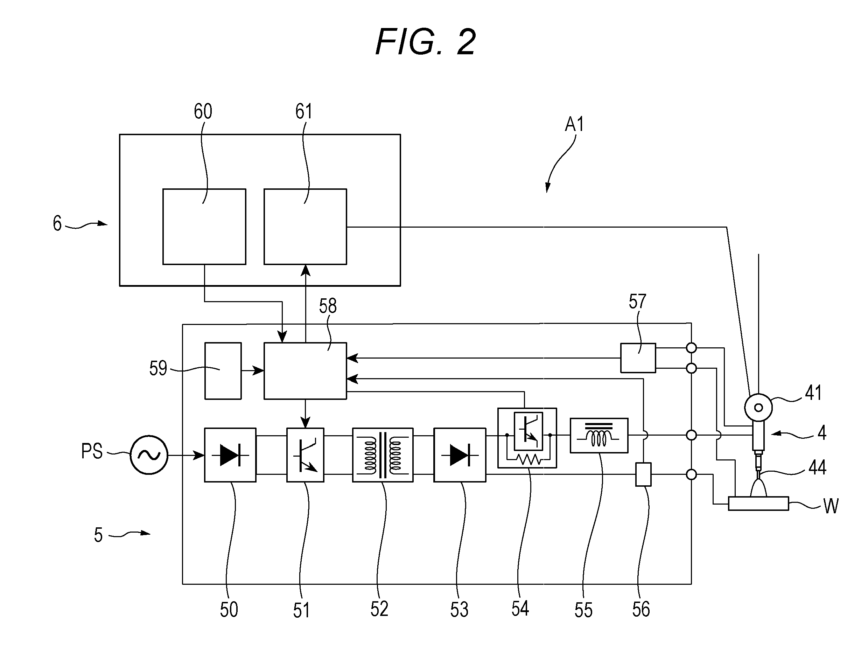

The external controller 6 is incorporated in the robot controller 3. As illustrated in Fig. 2, the external controller 6 includes an electric-current-and-voltage instructor 60 and an external axis control circuit 61. The electric-current-and-voltage instructor 60 acquires the set values of the electric current and the voltage from outside (for example, a user) through an input unit (not illustrated), for example, a keyboard or a touchscreen. The electric-current-and-voltage instructor 60 outputs these set values as analog or digital signals. This electric-current-and-voltage instructor 60 corresponds to an electric-current-and-voltage instructor that acquires a target voltage value from outside.

The external axis control circuit 61 is disposed in the robot controller 3 to control, for example, an actuator such as an actuator of a tool to be mounted on the tool mounter 2a other than the actuators of the robot 2. The external axis control circuit 61 controls the actuator of the feeding mechanism 41 in this embodiment.

The welding power supply 5 includes a primary rectifier circuit 50, a switching circuit 51, a transformer 52, a secondary rectifier circuit 53, a cut-off circuit 54, a reactor 55, an ammeter 56, a voltmeter 57, a welding controller 58, and a storage 59. The welding power supply 5 supplies the electric power for welding to the welding torch 4 and the workpiece W.

The primary rectifier circuit 50 is coupled to a commercial AC power supply PS and rectifies alternating current. The switching circuit 51 adjusts the supply power to the welding torch 4 by PWM. The transformer 52 transforms the output from the switching circuit 51, and insulates the input side and output side from each other. The secondary rectifier circuit 53 further rectifies the output from the transformer 52. The cut-off circuit 54 is constituted of, for example, a semiconductor. The cut-off circuit 54 cuts off the supply power to the welding torch 4 in response to a cut-off command. The reactor 55 smooths the supply power to the welding torch 4. The ammeter 56 measures the electric current (hereinafter referred to as "welding electric current") between the welding torch 4 and the workpiece W. The voltmeter 57 measures the voltage (hereinafter referred to as "welding voltage") between the welding torch 4 and the workpiece W.

The welding controller 58 is a computer that controls the feeding mechanism 41 and the switching circuit 51 so as to perform an arc welding method according to this embodiment. The storage 59 is, for example, a non-volatile memory. The storage 59 stores various values described later and similar parameter. The storage 59 stores reference patterns of feeding of the welding wire 44, the welding electric current, and the welding voltage. That is, the storage 59 functions as a reference-pattern storage. The reference pattern includes a set of a welding electric current value, a welding voltage value, a welding electric current waveform, an advancing speed, and a retreating speed. The welding electric current value and the welding voltage value stored as the reference pattern can be selected as necessary. For example, the electric current value and the voltage value that are frequently acquired as the set values by the electric-current-and-voltage instructor 60 may be stored as the welding electric current value and the welding voltage value of the reference pattern. The welding electric current waveform, the advancing speed, and the retreating speed that are stored as the reference pattern are set such that to the average value of the welding electric current and the average value of the welding voltage approximately coincide with the respective welding electric current value and welding voltage value of the reference pattern. These welding electric current waveform, advancing speed, and retreating speed can be set based on, for example, data accumulated in the past. Here, the storage 59 may store a plurality of reference patterns.

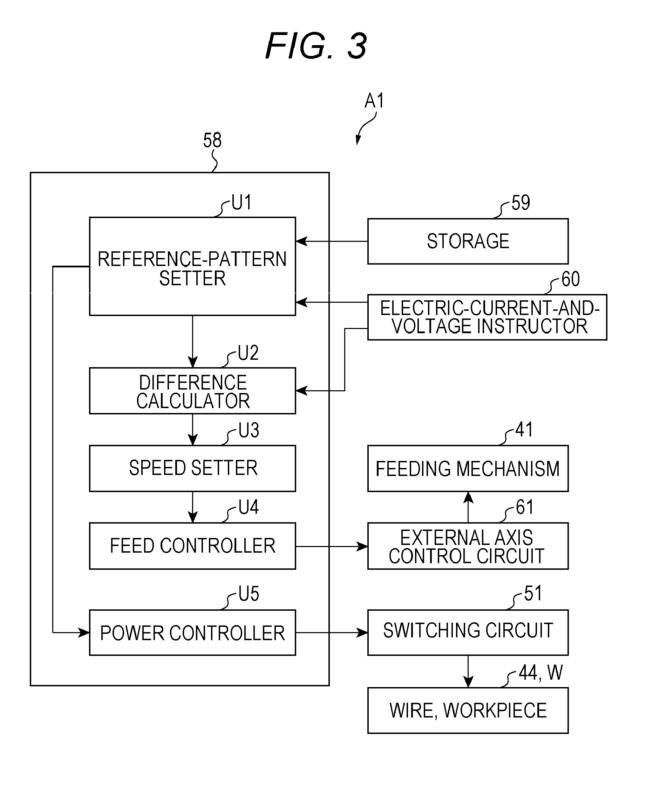

As illustrated in Fig. 3, the welding controller 58 includes a reference-pattern setter U1, a difference calculator U2, a speed setter U3, a feed controller U4, and a power controller U5. While illustration is omitted, respective members of the welding controller 58 are configured to refer to the various values and similar data stored in the storage 59.

The reference-pattern setter U1 acquires the set value (hereinafter referred to as "target electric current value") of the electric current from the electric-current-and-voltage instructor 60 to set a reference pattern appropriate for this set value. Specifically, the reference-pattern setter U1 selects, for example, a reference pattern including the welding electric current value close to the target electric current value from the reference patterns stored in the storage 59.

The difference calculator U2 acquires the welding voltage value of the reference pattern from the reference-pattern setter U1 and acquires the voltage set value (hereinafter referred to as "target voltage value") from the electric-current-and-voltage instructor 60. The difference calculator U2 calculates the difference voltage value before performing welding, by subtracting the welding voltage value of the reference pattern from the target voltage value.

The speed setter U3 sets the advancing speed and the retreating speed of the welding wire 44 to increase the ratio (hereinafter referred to as "speed ratio") of the magnitude of the retreating speed to the magnitude of the advancing speed corresponding to an increase in difference voltage value. The speed setter U3 may increase the magnitude of the retreating speed without changing the advancing speed. Additionally, the speed setter U3 may decrease the magnitude of the advancing speed without changing the retreating speed. Further, the speed setter U3 may decrease the magnitude of the advancing speed and increase the magnitude of the retreating speed at the same time.

More specifically, the speed setter U3 sets the advancing speed and the retreating speed so as to increase the above-described speed ratio compared with the reference pattern while the difference voltage value is a positive value, and so as to decrease the speed ratio compared with the reference pattern while the difference voltage value is a negative value. For example, in the case where the welding electric current value, the welding voltage value, and the speed ratio in the reference pattern are respectively 200 A, 20 V, and one while the target electric current value and the target voltage value are respectively 200 A and 22 V, the difference voltage value is +2 V. Accordingly, the speed setter U3 sets the advancing speed and the retreating speed such that the speed ratio has a value larger than one. In the case where the target electric current value and the target voltage value are respectively 200 A and 18 V with respect to the same reference pattern, the difference voltage value is -2 V. Accordingly, the speed setter U3 sets the advancing speed and the retreating speed such that the speed ratio has a value smaller than one.

For example, the speed setter U3 uses a function prepared in advance to increase the speed ratio corresponding to an increase in difference voltage value, so as to calculate the advancing speed and the retreating speed corresponding to the difference voltage value. Alternatively, the speed setter U3 refers to a table prepared in advance to increase the speed ratio corresponding to an increase in difference voltage value, so as to select the advancing speed and the retreating speed corresponding to the difference voltage value.

The feed controller U4 controls the feeding mechanism 41 via the external axis control circuit 61 to feed the welding wire 44 at the advancing speed and the retreating speed that are set by the speed setter U3. The power controller U5 controls the welding electric current. That is, the power controller U5 drives the switching circuit 51 to output the welding electric current in accordance with the welding electric current waveform of the reference pattern.

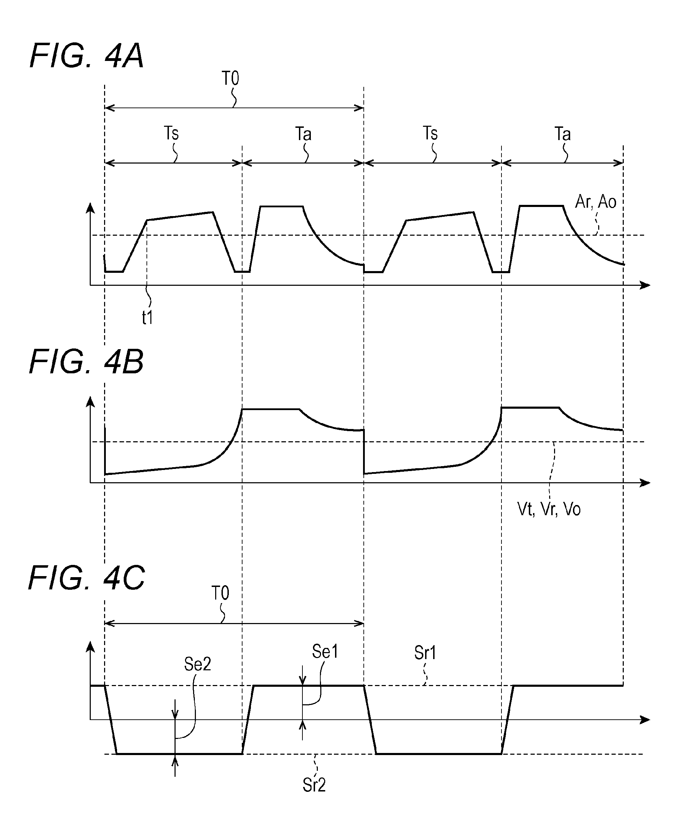

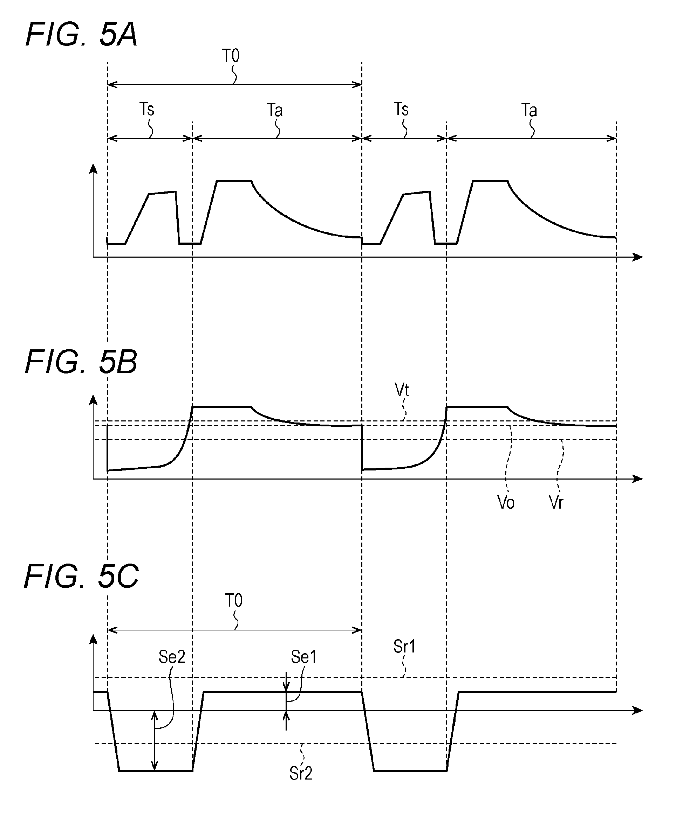

With reference to Figs. 4A to 4C and Figs. 5A to 5C, a description will be given of a concrete example of controls performed by the arc welding apparatus A1. Figs. 4A to 4C are graphs illustrating waveforms of the welding electric current, the welding voltage, and the feed speed in the case where the difference voltage value is zero. Figs. 5A to 5C are graphs illustrating waveforms of the welding electric current, the welding voltage, and the feed speed in the case where the difference voltage value is a positive value. Fig. 4A and Fig. 5A are graphs each illustrating a waveform of the welding electric current. In Fig. 4A and Fig. 5A, the horizontal axis denotes the time while the vertical axis denotes the welding electric current value. Fig. 4B and Fig. 5B are graphs each illustrating a waveform of the welding voltage. In Fig. 4B and Fig. 5B, the horizontal axis denotes the time while the vertical axis denotes the welding voltage value. Fig. 4C and Fig. 5C are graphs each illustrating a waveform of the feed speed. The horizontal axis in Fig. 4C and Fig. 5C denotes the time. The vertical axis in Fig. 4C and Fig. 5C denotes the feed speed assuming that the forward feed side is the positive side while the reverse feed side is the negative side. Here, Fig. 4C and Fig. 5C each illustrate the feed speed with the trapezoidal waveform. This, however, should not be construed in a limiting sense. The feed speed may have a sine wave shape, a rectangular wave shape, or a triangular wave shape.

In the case where a target voltage value Vt and a welding voltage value Vr of the reference pattern coincide with each other, the difference voltage value is zero. Accordingly, an advancing speed Se1 and a retreating speed Se2 that are set by the speed setter U3 respectively coincide with an advancing speed Sr1 and a retreating speed Sr2 of the reference pattern. The feed controller U4 controls the feeding mechanism 41 to repeat the forward feed and the reverse feed with a cycle T0 at the advancing speed Sr1 and the retreating speed Sr2 (see Fig. 4C). Accordingly, the feeding mechanism 41 drives the welding wire 44 at an advancing speed Sr1 and a retreating speed Sr2. Here, in this embodiment, the forward feed and the reverse feed of the welding wire 44 by the feeding mechanism 41 are performed concurrently with movement of the welding torch 4 by the robot 2.

When the forward feed of the welding wire 44 is performed, fusion portion of the welding wire 44 and the workpiece W are brought into contact with each other in the course of the forward feed. Accordingly, the short circuit condition is started. When the reverse feed of the welding wire 44 is performed, the welding wire 44 and the workpiece W are separated from each other in the course of the reverse feed. Accordingly, the arc condition is started. Thus, the short circuit condition and the arc condition are repeated corresponding to the forward feed and the reverse feed of the welding wire 44. Accordingly, the sum of a continuation time (hereinafter referred to as "short circuit period") Ts of the short circuit condition and a continuation time (hereinafter referred to as "arc period") Ta of the arc condition coincides with approximately the cycle T0.

As described above, the short circuit condition and the arc condition are generated by the forward feed at the advancing speed and the reverse feed at the retreating speed of the welding wire 44 by the feeding mechanism 41. Therefore, the feeding mechanism 41 corresponds to a driving unit that drives the welding wire 44 with respect to the workpiece W at the advancing speed and the retreating speed to generate the short circuit condition and the arc condition.

The power controller U5 acquires the welding electric current value from the ammeter 56 and drives the switching circuit 51 such that the welding electric current transitions in accordance with the welding electric current waveform of the reference pattern. The welding electric current waveform of the reference pattern is set to be repeated every short circuit period Ts and arc period Ta.

During the transition from the short circuit condition to the arc condition, the welding voltage sharply rises (see Fig. 4B). Based on this sharp rise, the start of the arc condition is detected. The welding voltage sharply drops during the transition from the arc condition to the short circuit condition. Based on this sharp drop, the start of the short circuit condition is detected.

The welding electric current waveform in the short circuit period Ts is set to keep a state at low electric current and then gradually increase corresponding to the elapsed time (see Fig. 4A). The raising rate of the welding electric current with respect to the elapsed time can be changed at a time t1. The raising rate of the welding electric current after the time t1 is slower than the raising rate of the welding electric current before the time t1. The welding electric current waveform in the arc period Ta is set to keep approximately a constant value and then gradually decrease corresponding to the elapsed time.

As described above, the power controller U5 controls the welding electric current in accordance with the reference pattern (such as the welding electric current waveform of the reference pattern). Additionally, the power controller U5 performs a control that reduces the welding electric current during the transition from the short circuit condition to the arc condition. This reduces spatter. For details, the power controller U5 drives the switching circuit 51 to reduce the welding electric current before the transition from the short circuit condition to the arc condition. Additionally, the power controller U5 drives the switching circuit 51 to raise the welding electric current after the start of the arc condition. The power controller U5 can detect the timing for reducing the welding electric current based on, for example, the elapsed time from the start of the short circuit condition. The power controller U5 may detect the above-described timing based on the welding electric current value or the welding voltage value. Additionally, instead of reducing the electric current by the switching circuit 51, the power controller U5 may cause the cut-off circuit 54 to cut off the electric current. Further, instead of raising the electric current by the switching circuit 51, the power controller U5 may deactivate the cut-off state by the cut-off circuit 54.

Thus, the control that repeats the short circuit condition and the arc condition is executed. As described above, the welding electric current waveform and the advancing speed Sr1 and the retreating speed Sr2 of the reference pattern are set such that the average value of the welding electric current and the average value of the welding voltage approximately coincide with the respective welding electric current value and welding voltage value of the reference pattern. Accordingly, in the case where the difference voltage value is zero, an average value Ao of the welding electric current approximately coincides with a welding electric current value Ar of the reference pattern. Further, in this case, an average value Vo of the welding voltage approximately coincides with a welding voltage value Vr of the reference pattern.

In the case where the target voltage value Vt is larger than the welding voltage value Vr of the reference pattern, the difference voltage value is a positive value. Accordingly, the advancing speed Se1 and the retreating speed Se2 are set to increase the above-described speed ratio compared with the advancing speed Sr1 and the retreating speed Sr2. That is, the advancing speed Se1 and the retreating speed Se2 are set to increase the speed ratio compared with the reference pattern. For example, the advancing speed Se1 is decreased compared with the advancing speed Sr1 while the retreating speed Se2 is increased compared with the retreating speed Sr2 (see Fig. 5C). Accordingly, the transition from the short circuit condition to the arc condition becomes earlier. As a result, the ratio of the short circuit period Ts to the arc period Ta is decreased. Thus, the average value Vo of the welding voltage becomes larger than the welding voltage value Vr and becomes closer to the target voltage value Vt (see Fig. 5B).

In the case where the target voltage value Vt is smaller than the welding voltage value Vr of the reference pattern, the difference voltage value is a negative value. Accordingly, the advancing speed Se1 and the retreating speed Se2 are set to decrease the speed ratio compared with the advancing speed Sr1 and the retreating speed Sr2. That is, the advancing speed Se1 and the retreating speed Se2 are set to decrease the speed ratio compared with the reference pattern. Accordingly, the transition from the short circuit condition to the arc condition is delayed. As a result, the ratio of the short circuit period Ts to the arc period Ta is increased. Thus, the average value Vo of the welding voltage becomes smaller than the welding voltage value Vr and becomes closer to the target voltage value Vt.

As described above, with the arc welding apparatus A1, adjusting the ratio of the short circuit period Ts to the arc period Ta allows the average value Vo of the welding voltage to be closer to the target voltage value Vt. On the other hand, a change in ratio of the short circuit period Ts to the arc period Ta does not have much influence on the amount of spatter. This allows controlling the welding voltage while reducing increase of spatter.

### [Second Embodiment]

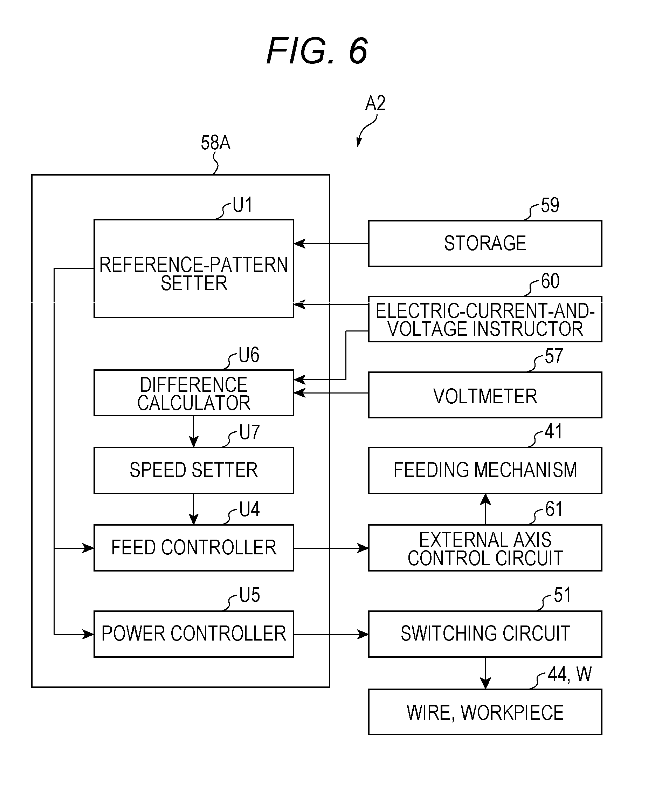

An arc welding apparatus A2 according to a second embodiment differs from the arc welding apparatus A1 according to the first embodiment in that the difference voltage value is calculated also while the welding is performed so as to set the advancing speed and the retreating speed. As illustrated in Fig. 6, a welding controller 58A of the arc welding apparatus A2 is obtained by replacing the difference calculator U2 and the speed setter U3 with a difference calculator U6 and a speed setter U7 in the welding controller 58.

Before welding is performed, the difference calculator U6 performs a process similar to that in the difference calculator U2 to calculate a first difference voltage value. While welding is performed, the difference calculator U6 calculates a second difference voltage value by subtracting the welding voltage value measured by the voltmeter 57 from the target voltage value. That is, the difference calculator U6 calculates the second difference voltage value using the welding voltage value measured by the voltmeter 57.

Before welding is performed, the speed setter U7 performs a process similar to that in the speed setter U3 to set a first advancing speed and a first retreating speed. While welding is performed, the speed setter U7 sets a second advancing speed and a second retreating speed to increase the above-described speed ratio corresponding to an increase in second difference voltage value.

More specifically, the speed setter U7 sets the second advancing speed and the second retreating speed to have a speed ratio larger than the speed ratio of the first advancing speed and the first retreating speed when the second difference voltage value is a positive value. Further, the speed setter U7 sets the second advancing speed and the second retreating speed to have a speed ratio smaller than the speed ratio of the first advancing speed and the first retreating speed when the second difference voltage value is a negative value.

For example, the speed setter U7 uses a function prepared in advance to increase the speed ratio corresponding to an increase in second difference voltage value, so as to calculate the second advancing speed and the second retreating speed corresponding to the second difference voltage value. Alternatively, the speed setter U7 refers to a table prepared in advance to increase the speed ratio corresponding to an increase in second difference voltage value, so as to select the second advancing speed and the second retreating speed corresponding to the second difference voltage value.

The feed controller U4 controls the feeding mechanism 41 via the external axis control circuit 61 to feed the welding wire 44 at the first advancing speed and the first retreating speed at the starting time point of welding and afterward feed the welding wire 44 at the second advancing speed and the second retreating speed.

The arc welding apparatus A2 adjusts the ratio of the short circuit period Ts to the arc period Ta based on the actually measured voltage value. This allows controlling the welding voltage with higher accuracy while reducing increase of spatter.

The embodiments of this disclosure have been described above. However, this disclosure is not limited to the above-described embodiments. Various changes of this disclosure may be made without departing from the spirit and scope of this disclosure. For example, the external controller 6 need not be incorporated in the robot controller 3. The external controller 6 may be one independent unit or may be integrated with the welding power supply 5.

In this embodiment, a difference calculating unit corresponds to the difference calculator U2 or U6, a speed setting unit corresponds to the speed setter U3 or U7, and a driving unit corresponds to the feeding mechanism 41. Further, a pattern storing unit corresponds to the storage 59, an electric-current-and-voltage instructing unit corresponds to the electric-current-and-voltage instructor 60, and a power control unit corresponds to the power controller U5.

An arc welding apparatus, an arc welding system, and an arc welding method according to this disclosure may be first to third arc welding apparatuses, a first arc welding system, and a first arc welding method as follows.

The first arc welding apparatus according to this disclosure is an apparatus for performing welding while repeatedly generating a short circuit condition and an arc condition. The apparatus includes a difference calculator, a speed setter, and a driver. The difference calculator is configured to calculate a difference voltage value by subtracting a welding voltage value from a target voltage value. The speed setter is configured to set an advancing speed and a retreating speed of a welding consumable with respect to a workpiece to increase a ratio of a magnitude of the retreating speed to a magnitude of the advancing speed corresponding to an increase in the difference voltage value. The driver is configured to drive the welding consumable at the advancing speed and the retreating speed.

The second arc welding apparatus according to the first arc welding apparatus further includes a pattern storage. The pattern storage is configured to store at least one reference pattern including one of the welding voltage values, the advancing speed, and the retreating speed. The advancing speed and the retreating speed correspond to the welding voltage value. The difference calculator is configured to calculate the difference voltage value using the welding voltage value of the reference pattern before performing welding. The speed setter is configured to set the advancing speed and the retreating speed before performing the welding, so as to increase the ratio compared with the reference pattern while the difference voltage value is a positive value, and so as to decrease the ratio compared with the reference pattern while the difference voltage value is a negative value.

The third arc welding apparatus according to the first or second arc welding apparatus further includes a voltmeter configured to measure the welding voltage value. The difference calculator is configured to calculate the difference voltage value using the welding voltage value measured by the voltmeter while welding is performed. The speed setter is configured to set the advancing speed and the retreating speed while the welding is performed.

The first arc welding system includes any one of the first to third arc welding apparatuses and a welding robot configured to hold and move the driver.

The first arc welding method is a method performed by an arc welding apparatus for performing welding while repeatedly generating a short circuit condition and an arc condition. The method includes: calculating a difference voltage value by subtracting a welding voltage value from a target voltage value; setting an advancing speed and a retreating speed of a welding consumable with respect to a workpiece to increase a ratio of a magnitude of the retreating speed to a magnitude of the advancing speed corresponding to an increase in the difference voltage value; and driving the welding consumable at the advancing speed and the retreating speed.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. An arc welding apparatus (A1, A2), comprising:
a difference calculating unit (U2, U6) configured to calculate a difference voltage value by subtracting a welding voltage value from a target voltage value;
a speed setting unit (U3, U7) configured to set an advancing speed and a retreating speed of a welding consumable (44) with respect to a workpiece (W) to increase a ratio of a magnitude of the retreating speed to a magnitude of the advancing speed corresponding to an increase in the difference voltage value; and
a driving unit (41) configured to drive the welding consumable at the advancing speed and the retreating speed to generate a short circuit condition and an arc condition.

2. The arc welding apparatus according to claim 1, further comprising
a pattern storing unit (59) configured to store at least one reference pattern including one of the welding voltage values, the advancing speed, and the retreating speed, the advancing speed and the retreating speed corresponding to the welding voltage value, wherein
the difference calculating unit is configured to calculate the difference voltage value using the welding voltage value of the reference pattern before performing welding, and
the speed setting unit is configured to set the advancing speed and the retreating speed before performing the welding, so as to increase the ratio compared with the reference pattern while the difference voltage value is a positive value, and so as to decrease the ratio compared with the reference pattern while the difference voltage value is a negative value.

3. The arc welding apparatus according to claim 1 or 2, further comprising
a voltmeter (57) configured to measure the welding voltage value, wherein
the difference calculating unit is configured to calculate the difference voltage value using the welding voltage value measured by the voltmeter while welding is performed, and
the speed setting unit is configured to set the advancing speed and the retreating speed while the welding is performed.

4. The arc welding apparatus according to any one of claims 1 to 3, further comprising
an electric-current-and-voltage instructing unit (60) configured to acquire a target voltage value from outside, wherein
the difference calculating unit is configured to acquire the target voltage value from the electric-current-and-voltage instructing unit.

5. The arc welding apparatus according to claim 2, further comprising
a power control unit (U5) configured to control welding electric current, wherein
the reference pattern includes a welding electric current waveform, and
the power control unit is configured to control the welding electric current in accordance with the welding electric current waveform of the reference pattern.

6. The arc welding apparatus according to claim 5, wherein
the power control unit is configured to reduce the welding electric current during transition from the short circuit condition to the arc condition.

7. An arc welding system (1), comprising
the arc welding apparatus (A1, A2) according to any one of claims 1 to 6; and
a welding robot (2) configured to hold and move the driving unit.

8. An arc welding method performed by an arc welding apparatus, the method comprising:
calculating a difference voltage value by subtracting a welding voltage value from a target voltage value;
setting an advancing speed and a retreating speed of a welding consumable (44) with respect to a workpiece (W) to increase a ratio of a magnitude of the retreating speed to a magnitude of the advancing speed corresponding to an increase in the difference voltage value; and
driving the welding consumable at the advancing speed and the retreating speed to generate a short circuit condition and an arc condition.
